(19) Europäisches Patentamt
European Patent Office
Office européen des brevets

(11) EP 3 597 609 B1

(12) EUROPEAN PATENT SPECIFICATION

(45) Date of publication and mention of the grant of the patent:
**07.06.2023 Bulletin 2023/23**

(21) Application number: **18766957.7**

(22) Date of filing: **27.02.2018**

(51) International Patent Classification (IPC):
***C02F 11/147*** *(2019.01)* ***B01D 21/01*** *(2006.01)*
*C02F 1/56* *(2023.01)*

(52) Cooperative Patent Classification (CPC):
(C-Sets available)
**C02F 1/56; C02F 11/147; C08F 220/34;**
B01D 21/01; C08F 2438/03 (Cont.)

(86) International application number:
**PCT/JP2018/007354**

(87) International publication number:
**WO 2018/168447 (20.09.2018 Gazette 2018/38)**

# (54) SLUDGE DEHYDRATING METHOD

SCHLAMMENTWÄSSERUNGSVERFAHREN

PROCÉDÉ DE DÉSHYDRATATION DE BOUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.03.2017 JP 2017048782**
**28.08.2017 JP 2017163494**

(43) Date of publication of application:
**22.01.2020 Bulletin 2020/04**

(73) Proprietor: **Kurita Water Industries Ltd.**
**Tokyo 164-0001 (JP)**

(72) Inventors:
- **SEKIGUCHI, Shihoko**
**Tokyo 164-0001 (JP)**
- **TAKEBAYASHI, Satoshi**
**Tokyo 164-0001 (JP)**
- **SATO, Shigeru**
**Tokyo 164-0001 (JP)**
- **WATANABE, Minoru**
**Tokyo 160-0023 (JP)**

(74) Representative: **TBK**
**Bavariaring 4-6**
**80336 München (DE)**

(56) References cited:
**EP-A1- 1 403 316**
**WO-A1-2008/015769**
**JP-A- 2005 034 787**
**JP-A- 2005 144 346**
**JP-A- 2007 029 766**
**JP-A- 2007 268 414**
**JP-A- 2007 268 414**
**JP-A- 2009 280 649**
**JP-A- 2012 210 579**
**JP-A- 2014 233 706**
**US-A1- 2004 124 154**
**US-B2- 7 745 529**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 220/34, C08F 220/56, C08F 222/385**

## Description

Technical Field

The present invention relates to a sludge dehydrating method as set out in the independent method claim 1 which comprises all essential features of the invention. Further, preferred embodiment is described in dependent claim 2.

Background Art

A cationic polymer coagulant is generally used for a dehydration treatment of sludge which mainly contains excess sludge produced in food plants, chemical plants, night soil treatment plants, and the like. However, with recent increase in the amount of sludge produced and change in the characteristics of sludge, sludge has been increasingly difficult-to-dehydrate, and improvements in dehydrating effects such as a gravity filtration property are strongly desired.

As the cationic polymer coagulant to be added to sludge, dimethylaminoethyl (meth)acrylate, a methyl chloride-quaternized product thereof, or the like has conventionally been mainly used; however, in addition to the treatment with such a cationic polymer coagulant, for example, proposals as disclosed in PTLs 1 to 5 have been made in order to improve the dehydrating effects further.

PTL1 discloses that an ionic water-soluble polymer having a charge inclusion ratio of 35 to 90%, the polymer obtained by granulating a liquid in the form of a water-in-oil type emulsion through a drying process, is used for a dehydration treatment of sludge.

In addition, PTLs 2 and 3 disclose that a coagulation treatment agent obtained by combining two crosslinkable, water-soluble, ionic polymers having a high charge inclusion ratio and of a low charge inclusion ratio is applied as a sludge dehydrating agent.

In addition, PTL4 discloses a sludge dehydrating agent using a mixture of an amidine-based polymer, a crosslinked type cationic polymer, and a non-crosslinked type cationic polymer, and PTL5 discloses a sludge dehydration treatment method in which an amphoteric polymer coagulant is added after an inorganic coagulant is added.

Citation List

Patent Literature

PTL1: JP 2009-280649 A
PTL2: JP 2005-144346 A
PTL3: WO 2008/015769 A
PTL4: JP 2011-224420 A
PTL5: JP 63-158200 A

US 2004/124154 A1 describes a process of flocculating and dewatering an aqueous suspension of suspended solids comprising, introducing into the suspension, (a) substantially linear polymer, (b) structured polymer, characterised in that the polymers are introduced into the substrate sequentially.

JP 2007 268414 A describes a dehydration method of organic sludge for performing dehydration by adding a cationic polymeric flocculant and an amphoteric polymeric flocculant to the organic sludge, the cationic polymeric flocculant is a cationic vinylic polymeric flocculant for which a quotient for which the viscosity (mPa s) of 0.2 wt.% aqueous solution measured at a rotating speed 30 rpm, an SB2 spindle and 30°C is divided by intrinsic viscosity (dL/g) measured at 30°C with a 1 mol/L sodium nitrate aqueous solution as a solvent is equal to or larger than 70.

US 7 745 529 B2 describes a flocculent composition and a method for manufacturing the same. The flocculant composition includes a vinyl crosslinking water-soluble polymer (A) having a charge inclusion ratio of 20% or more and a vinyl linear water-soluble polymer (B) having a charge inclusion ratio of 5% or more and less than 20%.

EP 1 403 316 A1 describes an amphoteric water-soluble polymer dispersing solution which comprises polymer fine particles with particle size of 100 nm or smaller. The amphoteric water-soluble polymer dispersing solution comprises polymer fine particles with particle size of 100 nm or smaller. Organic sludge is dehydrated by dissolving the amphoteric water-soluble polymer dispersing solution in water, adding organic sludge to it, mixing and dehydrating. An inorganic coagulant is used, too.

## Summary of Invention

### Technical Problem

However, a dehydration treatment of sludge cannot necessarily be performed efficiently with the conventional techniques as described above because a formed floc is small in size, adjusting the balance of two chemicals to be added is complicated, or the like.

In addition, PTL3 gives the following problem: a crosslinked polymer requires addition of a larger amount of a sludge dehydrating agent needed to coagulate sludge because the extension of the molecule of the crosslinked polymer in water is suppressed due to crosslinking, and therefore the cross linked polymer is present in "densely packed" molecular form. It is considered that this means that the state in which the extension of the molecule of the sludge dehydrating agent is suppressed, namely a case where the intrinsic viscosity is low, is inferior in sludge coagulating effect.

However, the mechanism and the like of the relationship between the extension of the molecule of a polymer, which is a sludge dehydrating agent, in water and the dehydrating effects have not sufficiently been clarified.

Thus, the present inventors have conducted studies focusing on the relationship between the extension of the molecule of a crosslinkable polymer and the coagulating effect on sludge. As a result, the present inventors have found that a particular polymer exhibits excellent dehydrating effects in a small amount to be added.

That is, an object of the present invention is to provide a sludge dehydrating method with an agent having excellent dehydrating effects, particularly, an excellent floc formation ability and gravity filtration property even if the amount to be added is small.

### Solution to Problem

The present invention is based on the finding that a dehydration treatment agent comprising a particular crosslinked polymer and having a particular intrinsic viscosity exhibits an excellent floc formation ability and gravity filtration property in a small amount to be added.

### Advantageous Effects of Invention

According to the present invention, a sludge dehydrating method with the agent having excellent dehydrating effects, particularly, an excellent floc formation ability and gravity filtration property even if the amount to be added is small can be provided.

### Description of Embodiments

Hereinafter, a sludge dehydrating method using the sludge dehydrating agent according to the present invention will be described in detail.

It is to be noted that "(meth)acryl" in the present specification means "acryl" and/or "methacryl," and the same applies to the notations of "(meth)acrylate" and "(meth)acrylo."

### [Sludge Dehydrating Agent]

The sludge dehydrating agent according to the method of the present invention comprises a polymer A as the single polymer. The crosslinked polymer has an intrinsic viscosity of 0.5 to 5.0 dL/g at 30°C in a 1.0 N aqueous solution of sodium nitrate.

Such a sludge dehydrating agent exhibits excellent dehydrating effects such as a floc formation ability and a gravity filtration property in an amount to be added which is equal to or smaller than that of conventional sludge dehydrating agents. The factor of obtaining the excellent dehydrating effects is considered to be due to the mechanisms as described in the following (1) and (2).

(1) The crosslinked polymer having an intrinsic viscosity as described above is highly crosslinked to make the molecule rigid and therefore has a structure in which it is hard for distortion to occur. Therefore, the surface of a sludge particle bonds strongly to a plurality of the crosslinked polymers and the whole face thereof is thereby covered without being covered by one molecule of the crosslinked polymer. As a result, bonds of high density are formed among the sludge particles through the crosslinked polymers, so that a hard floc that can endure strong shear such as stirring can be formed.

(2) In addition, in the crosslinked polymer, cationic charges are confined inside the highly crosslinked structure, and when physical force, such as stirring, is applied, the confined cationic charges are thereby released outside gradually,

so that a coarse floc becomes easily formed due to a sequential reaction between the cationic charges and the surface of the sludge particle.

(Crosslinked Polymer)

The crosslinked polymer for use in the sludge dehydrating agent is the polymer A described below as the single polymer.

The polymer A is contained from the viewpoint of obtaining higher dehydrating effects.

In the sludge dehydrating agent, for example, at least one compound or the like selected from the group consisting of powder acids such as sulfamic acid and salts and the like such as sodium sulfate may be contained in addition to the crosslinked polymer. However, from the viewpoint of the dehydrating effects, the content of the crosslinked polymer in the sludge dehydrating agent is preferably 90% by mass or more, more preferably 95% by mass or more, still more preferably 98% by mass or more, and particularly preferably 100% by mass.

<Polymer A>

The polymer A is a crosslinked polymer wherein a monomer composition of polymer constitutional units comprises 30 to 95 mol% of a cationic monomer represented by the following general formula (1) (hereinafter, simply denoted as "cationic monomer (1)") and a nonionic monomer. The method of polymerizing these monomers to make the crosslinked polymer is not particularly limited; however, if necessary, a crosslinking agent is used.

It is to be noted that the monomer composition of polymer constitutional units as referred to in the present invention does not include the crosslinking agent.

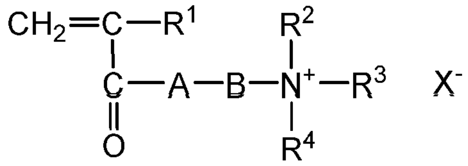

(1)

In the formula (1), $R^1$ represents a hydrogen atom or a methyl group. $R^2$ and $R^3$ each independently represent an alkyl group or an alkoxy group having 1 to 3 carbon atoms, or a benzyl group. $R^4$ represents a hydrogen atom, an alkyl group or an alkoxy group having 1 to 3 carbon atoms, or a benzyl group. A represents an oxygen atom or a NH group. B represents an alkylene group or an alkoxylene group having 2 to 4 carbon atoms. $X^-$ represents an anion and preferably represents chlorine, bromine, iodine, $1/2\cdot SO_4^-$, or $CH_3S_4^-$.

Examples of the cationic monomer (1) include: (meth)acryloyloxy alkyl quaternary ammonium salts such as 2-((meth)acryloyloxy)ethyltrimethylammonium chloride and 2-((meth)acryloyloxy)ethyldimethylbenzylammonium chloride; (meth)acryloyloxy alkyl tertiary amine salts such as 2-((meth)acryloyloxy)ethyldimethylamine sulfate or hydrochloride and 3-((meth)acryloyloxy)propyldimethylamine hydrochloride; and (meth)acryloylamino alkyl quaternary ammonium salts such as 3-((meth)acryloylamino)propyltrimethylammonium chloride and 3-((meth)acryloylamino)propyltrimethylammonium sulfate. These may be used singly or in combinations of two or more. Among these, (meth)acryloyloxy alkyl quaternary ammonium salts are preferable, and 2-(acryloyloxy)ethyltrimethylammonium chloride is particularly preferable because 2-(acryloyloxy)ethyltrimethylammonium chloride has excellent polymerizability, and a crosslinked polymer having a strong structure is easily obtained.

In the polymer A, 30 to 95 mol% of the cationic monomer (1) is contained as a polymer constitutional unit. The polymer A is a copolymer of a cationic monomer and a nonionic monomer.

Examples of the nonionic monomer include: amides such as (meth)acrylamide and N,N-dimethyl (meth)acrylamide; vinyl cyanide-based compounds such as (meth)acrylonitrile; (meth)acrylic acid alkyl esters such as methyl (meth)acrylate and ethyl (meth)acrylate; vinyl esters such as vinyl acetate; and aromatic vinyl-based compounds such as styrene, α-methylstyrene, and p-methylstyrene. These nonionic monomers may be used singly or in combinations of two or more. Among these, acrylamide is preferable because acrylamide has excellent water-solubility, adjusting the monomer composition ratio in a polymer is easy, and a crosslinked polymer having a strong structure is easily obtained.

(Intrinsic Viscosity)

The crosslinked polymer constituting the sludge dehydrating agent according to the method of the present invention has an intrinsic viscosity of 0.5 to 5.0 dL/g at 30°C in a 1.0 N aqueous solution of sodium nitrate.

The intrinsic viscosity is used as an index of the molecular weight, and there is a tendency that the larger the

molecular weight of a polymer is, the higher the intrinsic viscosity is. However, the intrinsic viscosity is also influenced by the structures of monomers which are polymer constitutional units, the polymerization conditions, and the like and therefore does not necessarily correspond to the magnitude of the molecular weight.

In the present invention, among the crosslinked polymers, those having a particular intrinsic viscosity are used.

When the intrinsic viscosity is outside the above-described range, there is a tendency that it is hard to make the diameter of the floc to be formed large, and the sludge dehydrating agent is inferior in the gravity filtration property, so that sufficient dehydrating effects are not obtained. From the viewpoint of obtaining higher dehydrating effects, the crosslinked polymer preferably has an intrinsic viscosity of 0.8 to 4.9 dL/g, more preferably 1.0 to 4.5 dL/g, and still more preferably 1.2 to 4.5 dL/g.

The intrinsic viscosity is represented by [η] and is defined as a value calculated using the Huggins expression described below.

$$\text{Huggins expression: } \eta_{sp}/C = [\eta] + k'[\eta]^2 C$$

In the expression, $\eta_{sp}$: specific viscosity (= $\eta_{rel}$ - 1), k': Huggins constant, and $\eta_{rel}$: relative viscosity.

When solutions of the crosslinked polymer each having a different concentration are prepared; the specific viscosity $\eta_{sp}$ is determined for solutions of respective concentrations; and the relationship of $\eta_{sp}$/C versus C is plotted, a value at an intercept obtained by extrapolating C to 0 is the intrinsic viscosity [η].

The specific viscosity $\eta_{sp}$ is determined by the method as described in the Examples below.

[Method for Producing Crosslinked Polymer]

The crosslinked polymer can be produced by mixing and polymerizing the monomers to be polymer constitutional units, a polymerization initiator, and if necessary, a crosslinking agent.

Examples of the polymerization initiator include: persulfates such as ammonium persulfate and potassium persulfate; organic peroxides such as benzoyl peroxide; and azo-based compounds such as azobisisobutyronitrile, azobiscyanovaleric acid, 2,2'-azobis(2-amidinopropane) dihydrochloride, and 2,2'-azobis(2,4-dimethylvaleronitrile).

The amount of the polymerization initiator to be used is usually about 0.001 to 0.1 mol% based on the total amount of the monomers.

Examples of the crosslinking agent include N,N'-methylenebis(meth)acrylamide, triallylamine, ethylene glycol di(meth)acrylate, polyethylene glycol di(meth)acrylate, and 1,3-butylene glycol di(meth)acrylate.

The amount of the crosslinking agent to be added is adjusted so that the intrinsic viscosity of the crosslinked polymer can fall within the above-described range. The amount of the crosslinking agent to be added is preferably 50 to 500 ppm, more preferably 80 to 300 ppm, and still more preferably 100 to 200 ppm based on the total mass of the monomers usually excluding the crosslinking agent.

The aspect of the polymerization method is not particularly limited, and examples thereof include an aqueous polymerization method, an emulsion polymerization method, and a suspension polymerization method. Among these, from the viewpoint of easiness of handling, solubility to sludge, and the like of the resultant crosslinked polymer, production methods by which the crosslinked polymer is obtained as a liquid in the form of an emulsion are preferable, and the crosslinked polymer is more preferably obtained as a liquid in the form of a water-in-oil type emulsion (W/O type emulsion) by an emulsion polymerization method.

For example, emulsion polymerization can be performed in such a way that a mixed aqueous solution containing the monomers to be the polymer constitutional units of the crosslinked polymer, water, and if necessary, a crosslinking agent is added to an oil layer mixture containing a surfactant and an oil-based solvent, a resultant mixture is emulsified by stirring and mixing, and a polymerization initiator is added thereto. By such a method, the crosslinked polymer is obtained as a liquid in the form of a W/O type emulsion.

As the oil-based solvent, normal paraffin, isoparaffin, naphthenic oil, and the like, which are mineral oils, such as kerosene and light oil, and refined products thereof, can be used, and synthetic oils, vegetable oils, and animal oils, or mixtures thereof, which have the characteristics equal to those of the above-described oils, can also be used.

As the surfactant, for example, nonionic surfactants including: sorbitan fatty acid esters such as sorbitan monooleate and sorbitan monostearate; and polyoxyethylene alkyl ethers such as polyoxyethylene lauryl ether and pentaoxyethylene oleyl ether can be suitably used.

In addition, such a crosslinked polymer obtained as a liquid in the form of an emulsion may be granulated or made into a powder by spray drying using a spray drier or the like to be made into a dried, granulated body or powder. When such a form is made, the easiness of handling of the sludge dehydrating agent can be improved.

[Sludge Dehydrating Method]

The sludge dehydrating method according to the present invention is a method for dehydrating the sludge by adding the sludge dehydrating agent to sludge such as excess sludge and mixed sludge from food plants, chemical plants, night soil treatment plants, and the like.

The sludge dehydrating agent according to the method of the present invention can exhibit excellent dehydrating effects even in a small amount and therefore can suppress the amount to be added to sludge, so that an improvement in the operability and a reduction in cost of a dehydration treatment can be achieved. For example, when the concentration of suspended substances(SS) is about 0.4 to about 4.0% by mass, the amount of the sludge dehydrating agent to be added is preferably 20 to 1600 mg/L, more preferably 50 to 1200 mg/L, and still more preferably 60 to 800 mg/L.

The method of adding the sludge dehydrating agent to sludge is not particularly limited, and known methods of adding a sludge dehydrating agent can be applied. Generally, a sludge dehydrating agent is added to sludge as an aqueous solution or aqueous dispersion having a crosslinked polymer concentration in the sludge dehydrating agent of 0.01 to 0.5 % by mass, preferably 0.03 to 0.3% by mass. The sludge dehydrating agent may be added in the form of a solid such as a powder according to circumstances.

Examples

Hereinafter, the present invention will be described based on Examples, but the present invention is not limited by the following Examples.

[Preparation of Polymers]

Polymers (A1) to (A5), (B1), and (C1) to be used in Examples were produced according to the following Synthesis Examples 1 to 7 respectively. In addition, polymers (Z1) and (Z2) to be used in the following Comparative Examples were produced according to the following Synthesis Examples 8 and 9 respectively.

In addition, polymers (Z3) to (Z9) which are commercially available products were also used in the Examples and the Comparative Examples. It is to be noted that the polymer (Z7) is a polyamidine-based coagulant.

(Synthesis Example 1) Synthesis of Polymer (A1)

In a 1-L four-neck separable flask equipped with a stirrer, a cooling pipe, a nitrogen introduction pipe, and a thermometer, 312 g of normal paraffin, 25 g of pentaoxyethylene oleyl ether, and 25 g of sorbitan monooleate were loaded, and stirred and mixed to prepare an oil layer mixture.

Subsequently, a mixed aqueous solution of 388 g of an aqueous solution containing 80% by mass of 2-(acryloyloxy)ethyltrimethylammonium chloride (DAA), 28 g of acrylamide (AAM), 0.04 g of N,N'-methylenebisacrylamide as a crosslinking agent, and 222 g of pure water was added to the oil layer mixture, and a resultant mixture was emulsified by stirring with a homogenizer. The temperature of this emulsified liquid was adjusted to 50°C while the liquid was stirred, and a nitrogen gas was allowed to blow in the liquid for 30 minutes. A toluene solution containing 4% by mass of 2,2'-azobis(2,4-dimethylvaleronitrile) in an amount of 2 g was added to the emulsified liquid to perform polymerization at 45 to 55°C for 8 hours while a nitrogen gas was allowed to flow into a gas phase, and thus a crosslinked polymer was obtained as a liquid in the form of a W/O type emulsion.

This liquid in the form of an emulsion was spray-dried with a desk top spray drier to obtain a crosslinked polymer (A1) as a powder containing 5% by mass or less of water.

(Synthesis Example 2) Synthesis of Polymer (A2)

A crosslinked polymer (A2) was obtained as a liquid in the form of a W/O type emulsion in the same manner as in Synthesis Example 1 except that the amount of N,N'-methylenebisacrylamide added in Synthesis Example 1 was changed to 0.06 g, and the spray drying with a spray drier was not performed.

(Synthesis Example 3) Synthesis of Polymer (A3)

A crosslinked polymer (A3) was obtained as a powder containing 5% by mass or less of water in the same manner as in Synthesis Example 1 except that the formulation of the raw materials to be added to the oil layer mixture in Synthesis Example 1 was changed to 349 g of the aqueous solution containing 80% by mass of 2-(acryloyloxy)ethyltrimethylammonium chloride (DAA), 68 g of acrylamide (AAM), and 0.05 g of N,N'-methylenebisacrylamide.

(Synthesis Example 4) Synthesis of Polymer (A4)

A crosslinked polymer (A4) was obtained as a powder containing 5% by mass or less of water in the same manner as in Synthesis Example 1 except that the amount of N,N'-methylenebisacrylamide added in Synthesis Example 1 was changed to 0.035 g.

(Synthesis Example 5) Synthesis of Polymer (A5)

An oil layer mixture was prepared in the same manner as in Synthesis Example 1.

Subsequently, a mixed aqueous solution of 349 g of an aqueous solution containing 80% by mass of 2-(acryloyloxy)ethyltrimethylammonium chloride (DAA), 68 g of acrylamide (AAM), 0.065 g of N,N'-methylenebisacrylamide as a crosslinking agent, 0.26 g of 2,2'-azobis(2-methylpropionamidine) dihydrochloride as a polymerization initiator, and 222 g of pure water was added to the oil layer mixture, and a resultant mixture was emulsified by stirring with a homogenizer. The temperature of this emulsified liquid was adjusted to 50°C while the liquid was stirred, and a nitrogen gas was allowed to blow in the liquid for 30 minutes. Polymerization was performed at 45 to 55°C for 8 hours while a nitrogen gas was allowed to flow into a gas phase, and thus a crosslinked polymer (A5) was obtained as a liquid in the form of a W/O type emulsion.

(Synthesis Example 6) Synthesis of Polymer (B1)

A crosslinked polymer (B1) was obtained as a powder containing 5% by mass or less of water in the same manner as in Synthesis Example 1 except that the formulation of the mixed aqueous solution to be added to the oil layer mixture in Synthesis Example 1 was changed to 370 g of an aqueous solution containing 70% by mass of diallyldimethylammonium chloride (DADMAC), 76 g of acrylamide (AAM), 192 g of pure water, and 1 g of a toluene solution containing 4% by mass of 2,2'-azobis(2,4-dimethylvaleronitrile).

(Synthesis Example 7) Synthesis of Polymer (C1)

An oil layer mixture was prepared in the same manner as in Synthesis Example 1.

Subsequently, a mixed aqueous solution of 363 g of an aqueous solution containing 80% by mass of 2-(acryloyloxy)ethyltrimethylammonium chloride (DAA), 28 g of acrylamide (AAM), 7.2 g of acrylic acid (AA), 0.04 g of N,N'-methylenebisacrylamide as a crosslinking agent, and 240 g of pure water was added to the oil layer mixture, and a resultant mixture was emulsified by stirring with a homogenizer. The temperature of this emulsified liquid was adjusted to 50°C while the liquid was stirred, and a nitrogen gas was allowed to blow in the liquid for 30 minutes. Thereafter, 2g of a toluene solution containing 4% by mass of 2,2'-azobis(2,4-dimethylvaleronitrile) was added to the emulsified liquid to perform polymerization at 45 to 55°C for 8 hours while a nitrogen gas was allowed to flow into a gas phase, and thus a crosslinked polymer (C1) was obtained as a liquid in the form of a W/O type emulsion.

(Synthesis Example 8) Synthesis of Polymer (Z1)

A crosslinked polymer (Z1) was obtained as a liquid in the form of a W/O type emulsion in the same manner as in Synthesis Example 2 except that the formulation of the raw materials to be added to the oil layer mixture in Synthesis Example 2 was changed to 0.03 g of N, N'-methylenebisacrylamide and 1.5 g of the toluene solution containing 4% by mass of 2,2'-azobis(2,4-dimethylvaleronitrile).

(Synthesis Example 9) Synthesis of Polymer (Z2)

A crosslinked polymer (Z2) was obtained as a powder containing 5% by mass or less of water in the same manner as in Synthesis Example 1 except that the formulation of the raw materials to be added to the oil layer mixture in Synthesis Example 1 was changed to 349 g of the aqueous solution containing 80% by mass of 2-(acryloyloxy)ethyltrimethylammonium chloride (DAA), 68 g of the amount of acrylamide (AAM), 0.05 g of N, N'-methylenebisacrylamide, and 4.5 g of the toluene solution containing 4% by mass of 2,2'-azobis(2,4-dimethylvaleronitrile).

[Measurement of Intrinsic Viscosity]

The intrinsic viscosity for each polymer described above was determined in the following manner.

(1) In a neutral detergent for glassware, 5 Cannon-Fenske viscometers (No. 75 manufactured by Kusano Kagaku

K.K.) were immersed for 1 day or longer, and then washed sufficiently with deionized water and dried.

(2) To deionized water, 0.3 g of the polymer precisely weighed was added while the deionized water was stirred at 500 rpm with a magnetic stirrer, and after the stirring was conducted for 2 hours, a resultant solution was left to stand for 15 to 24 hours to prepare an aqueous solution containing 0.2% by mass of the polymer. Thereafter, the aqueous solution was stirred at 500 rpm for 30 minutes, and the whole amount of the aqueous solution was then filtered with a 3G2 glass filter.

It is to be noted that with respect to the polymers (A2), (A5), (C1), and (Z1), the liquid in the form of a W/O type emulsion was added to a large excess of acetone to perform purification by precipitation, and this precipitate was vacuum-dried into a powder to be provided for the intrinsic viscosity measurement.

(3-1) With respect to the polymers (A1) to (A5), (B1), (C1), (Z1) to (Z4), (Z6), and (Z8), 50 mL of a 2 N aqueous solution of sodium nitrate was added to 50 mL of the filtrate, a resultant solution was stirred at 500 rpm for 20 minutes with a magnetic stirrer to obtain a 1 N aqueous solution of sodium nitrate having a polymer concentration of 0.1% by mass, and this 1 N aqueous solution of sodium nitrate was diluted with a 1 N aqueous solution of sodium nitrate to prepare 5 levels of polymer sample solutions within a range of 0.02 to 0.1% by mass. It is to be noted that the 1 N aqueous solution of sodium nitrate (1N-$NaNO_3$) was used as a blank liquid.

(3-2) With respect to the polymer (Z5), a polymer sample solution was prepared using a 0.2 N or 0.1 N aqueous solution of sodium chloride in place of the 2 N or 1 N aqueous solution of sodium nitrate in (3-1). It is to be noted that the 0.1 N aqueous solution of sodium chloride (0.1 N-NaCl) was used as a blank liquid.

(3-3) With respect to the polymers (Z7) and (Z9), polymer sample solutions were each prepared using a 2 N or 1 N aqueous solution of sodium chloride in place of the 2 N or 1 N aqueous solution of sodium nitrate in (3-1). It is to be noted that the 1 N aqueous solution of sodium chloride (1N-NaCl) was used as a blank liquid.

(4) In a constant-temperature water tank in which the temperature was adjusted to 30°C (within ±0.02°C), the 5 viscometers were installed vertically. In each viscometer, 10 mL of the blank liquid was placed with a whole pipette, and the viscometer was then left to stand for about 30 minutes in order to make the temperature constant. Thereafter, the liquid was sucked up using a syringe stopper and was then allowed to fall naturally, and the time when the liquid transited the marked line was measured down to units of 1/100 seconds with a stopwatch. This measurement was repeated 5 times for each viscometer, and the average value was used as a blank value ($t_0$).

(5) In the 5 viscometers with which the measurement of the blank liquid was conducted, 10 mL each of the 5 levels of polymer sample solutions prepared above, respectively, were placed, and the viscometers were left to stand for about 30 minutes in order to make the temperature constant. Thereafter, the operation which is the same as that in the measurement of the blank liquid was repeated 3 times, and the average value of the transit times for each concentration was used as a measured value (t).

(6) The relative viscosity $\eta_{rel}$, the specific viscosity $\eta_{sp}$, and the reduced viscosity $\eta_{sp}$/C [dL/g] were determined from the blank value $t_0$, measured value t, and the concentration C [mass/volume %] (= C [g/dL]) of the polymer sample solution according to the following relational expression.

$$\eta_{rel} = t/t_0$$

$$\eta_{sp} = (t - t_0)/t_0 = \eta_{rel} - 1$$

From these values, the intrinsic viscosity of each polymer was calculated according to the above-described method of determining the intrinsic viscosity based on the Huggins expression.

The results of measuring the intrinsic viscosity for each polymer are shown in Table 1 described below.

It is to be noted that the abbreviations in the monomer compositions in Table 1 are as follows.

- Cationic monomer (1)

  DAA: 2-(acryloyloxy)ethyltrimethylammonium chloride
  DAM: 2-(methacryloyloxy)ethyltrimethylammonium chloride
  DAM (Bz): 2-(methacryloyloxy)ethyldimethylbenzylammonium chloride
  DAM (sulfuric acid): 2-(methacryloyloxy)ethyldimethylamine sulfate

- Nonionic monomer
  AAM: acrylamide
- Cationic monomer (2)

DADMAC: diallyldimethylammonium chloride

• Anionic monomer (3)

AA: acrylic acid

NaA: sodium acrylate

Table 1

| Polymer | | Form | Monomer composition (mol%) | Molecule | Intrinsic viscosity | |
|---|---|---|---|---|---|---|
| | | | | | [η] (dL/g) | Solvent for measurement |
| A1 | Synthesis Example 1 | Powder | DAA/AAM (80/20) | Crosslinked | 3.7 | 1N-NaNOa |
| A2 | Synthesis Example 2 | Emulsion | DAA/AAM (80/20) | Crosslinked | 1.5 | 1N-$NaNO_3$ |
| A3 | Synthesis Example 3 | Powder | DAA/AAM (60/40) | Crosslinked | 2.2 | 1N-$NaNO_3$ |
| A4 | Synthesis Example 4 | Powder | DAA/AAM (80/20) | Crosslinked | 4.4 | 1N-$NaNO_3$ |
| A5 | Synthesis Example 5 | Emulsion | DAA/AAM (60/40) | Crosslinked | 0.8 | 1N-$NaNO_3$ |
| B1 | Synthesis Example 6 | Powder | DADMAC/AAM (60/40) | Crosslinked | 1.9 | 1N-$NaNO_3$ |
| C1 | Synthesis Example 7 | Emulsion | DAA/AAM/AA (75/20/5) | Crosslinked | 3.2 | 1N-$NaNO_3$ |
| Z1 | Synthesis Example 8 | Emulsion | DAA/AAM (80/20) | Crosslinked | 5.4 | 1N-NaNOs |
| Z2 | Synthesis Example 9 | Powder | DAA/AAM (60/40) | Crosslinked | 0.3 | 1N-$NaNO_3$ |
| Z3 | Commercially available product | Powder | DAM (100) | Straight chain | 8.0 | 1N-$NaNO_3$ |
| Z4 | Commercially available product | Powder | DAA/AAM (85/15) | Straight chain | 3.5 | 1N-$NaNO_3$ |
| 25 | Commercially available product | Powder | DAM (Bz) (100) | Straight chain | 7.5 | 0.1N-NaCl |
| Z6 | Commercially available product | Powder | DAM (sulfuric acid) (100) | Straight chain | 8.5 | 1N-$NaNO_3$ |
| Z7 | Commercially available product | Powder | Polyamidine-based | Straight chain | 3.5 | 1N-NaCl |
| Z8 | Commercially available product | Powder | DAM/DAA/AAM/AA (20/5/60/15) | Straight chain | 8.5 | 1N-$NaNO_3$ |

(continued)

| Polymer | | Form | Monomer composition (mol%) | Molecule | Intrinsic viscosity | |
|---|---|---|---|---|---|---|
| | | | | | [η] (dL/g) | Solvent for measurement |
| 29 | Commercially available product | Powder | AAM/NaA (70/30) | Straight chain | 16.0 | 1N-NaCl |

[Evaluation of Sludge Dehydration]

Evaluation tests of sludge dehydration for various types of sludge were conducted for sludge dehydrating agent samples using various polymers shown in Table 1 described above. It is to be noted that the polymer concentration in each aqueous polymer solution used in the evaluation tests described below was set to 0.2% by mass excluding the polymer (Z9), and the polymer concentration of the polymer (Z9) was set to 0.1% by mass.

In Table 2 described below, the characteristics of the various types of sludge used for the evaluation tests are shown. It is to be noted that the abbreviations and measurement methods (in accordance with the sewer testing methods) for respective components in the characteristics of sludge are as described below. In addition, "%" in the notation of the unit of the amounts of respective components means % by mass.

SS (Suspended Solid): Suspended Solids; Sludge in an amount of 100 mL was subjected to centrifugal separation at 3000 rpm for 10 minutes to remove a supernatant liquid, and the sediment was poured into a weighed crucible while being washed with water, and the mass of the sediment after being dried at 105 to 110°C was expressed as a mass ratio to the sludge.

VSS (Volatile suspended solids): Ignition loss of suspended solids; After the suspended solids were weighed, the crucible in which the suspended solids were placed was ignited at a temperature within a range of 600±25°C, the crucible was weighed after being subjected to radiation cooling, and the difference in the mass before and after the ignition was expressed as a mass ratio to the suspended solids.

TS (Total solids); Evaporation residue; Sludge in an amount of 100 mL was placed in a weighed crucible, and the mass of the sludge after being dried at 105 to 110°C was expressed as a mass ratio to the sludge.

VTS (Volatile Total Solids): Ignition loss; After the evaporation residue was weighed, the crucible in which the evaporation residue was placed was ignited at a temperature within a range of 600±25°C, the crucible was weighed after being subjected to radiation cooling, and the difference in the mass before and after the ignition was expressed as a mass ratio to the evaporation residue.

Fiber content: Sludge in an amount of 100 mL was filtered with a 100-mesh sieve, the residue on the sieve was poured into a crucible while being washed with water, and the crucible was weighed after the residue was dried at 105 to 110°C. Thereafter, the crucible was ignited at a temperature within a range of 600±25°C, the crucible was weighed after being subjected to radiation cooling, and the difference in the mass before and after the ignition was expressed as a mass ratio to the suspended solids.

Table 2

| No. | Type of sludge | pH | SS (%) | VSS (%/SS) | TS (%) | VTS (%/TS) | Fiber content (%/SS) | Electric conductivity (mS/m) |
|---|---|---|---|---|---|---|---|---|
| 1 | Excess sludge 1 at food plant | 6.9 | 1.3 | 79.7 | 1.3 | 75.6 | 3.6 | 131 |
| 2 | Excess sludge 2 at food plant | 6.5 | 1.2 | 84.9 | 1.4 | 81.9 | 3.3 | 139 |
| 3 | Excess sludge at chemical plant | 7.6 | 2.8 | 88.0 | 3.8 | 87.4 | 1.4 | 320 |
| 4 | Excess sludge at night soil treatment plant | 6.7 | 3.0 | 75.3 | 3.2 | 73.6 | 10.0 | 114 |
| 5 | Mixed sludge at night soil treatment plant | 5.1 | 2.6 | 84.7 | 2.6 | 82.5 | 22.0 | 186 |

(Example 1)

It is to be noted that only examples 2-3, 6-8, 10, 11, 12, 15, 16, 18, 19, 21, 22 and 24 are according to the invention. All other examples are not according to the current invention.

An aqueous solution containing 0.2% by mass of the polymer (A1) and an aqueous solution containing 0.2% by mass of the polymer (Z4) were mixed in a mass ratio of 50:50 to prepare a sludge dehydrating agent sample (aqueous polymer solution).

This sludge dehydrating agent sample was added to 200 mL of the sludge 1 taken in a 300-mL beaker so that the amount of the polymers added was 120 mg/L (0.9% by mass/SS), and a resultant mixture was stirred at 180 rpm for 30 seconds to form a coagulation floc.

(Examples 2 to 24 and Comparative Examples 1 to 24)

Sludge dehydrating agent samples were each prepared and added to sludge to form a coagulation floc in the same manner as in Example 1 except that the type of the sludge, and the types of the polymers to be used, and the amount of the polymers to be added in Example 1 were changed as shown in Table 3.

(Example 25)

An aqueous solution containing 0.2% by mass of the polymer (A1) was added to 200 mL of the sludge 5 taken in a 300-mL beaker so that the amount of the polymer added was 90 mg/L (0.4% by mass/SS), and a resultant mixture was stirred at 180 rpm for 30 seconds, thereafter an aqueous solution containing 0.1% by mass of the polymer (Z9) (anionic polymer) was added so that the amount of the polymer added was 35 mg/L (0.15% by mass/SS), and further, a resultant mixture was stirred at 180 rpm for 20 seconds to form a coagulation floc.

(Comparative Example 25)

A coagulation floc was formed in the same manner as in Example 25 except that the polymer (Z3) was used in place of the polymer (A1) in Example 25.

Evaluation test items and evaluation methods thereof for the sludge dehydrating agent samples are as follows. The evaluation results for these are summarized in Tables 3 and 4 described below.

<Floc Diameter>

The floc diameters of about 100 flocs, which can be observed from above the beaker, were measured visually with a measure for the coagulation flocs formed in the Examples and Comparative Examples to determine the approximate average size.

It can be deemed that the larger this floc is, the higher the floc formation ability of a sludge dehydrating agent is and the higher sludge dehydrating effect the sludge dehydrating agent has.

<Filtration Volume for 20 Seconds>

A Buchner funnel having an inner diameter of 80 mm and a pore size of about 1 mm was installed on a 200-mL measuring cylinder, and a polyvinyl chloride tube having a diameter of 50 mm was installed on the Buchner funnel. In this tube, the coagulated sludge after measuring the floc diameter above was poured at once, and the filtration volume 20 seconds after pouring the sludge was measured by reading the scale of the measuring cylinder.

It can be deemed that the larger this filtration volume is, the higher gravity filtration property and dehydrating effects the sludge dehydrating agent has.

<Amount of SS Leak>

After the above-described filtration volume for 20 seconds was measured, the solid content in the sludge transited through the Buchner funnel was measured 60 seconds after pouring the sludge as the amount of an SS leak by reading the scale of the measuring cylinder.

It can be deemed that the smaller the amount of an SS leak is, the higher ability of coagulating the formed floc and dehydrating effects the sludge dehydrating agent has.

<Water Content in Cake>

After the above-described amount of an SS leak was measured, the coagulated product left in the Buchner funnel was packed in a polyvinyl chloride column having a diameter of 30 mm and a height of 17.5 mm. The column was removed, and the coagulated product was compressed at 0.1 MPa for 60 seconds to obtain a dehydrated cake. The mass of this dehydrated cake and the mass of this hydrated cake after being dried at 105°C were measured, and the amount of reduced mass was regarded as the water amount of the dehydrated cake to calculate the water content in cake.

When the water content in cake is about 80 to about 85% by mass, the dehydrated cake can be handled in the same manner as in conventional cake, and a lower value is preferable in the water content from the viewpoint of drying treatment and the like.

It is to be noted that the filtration and compression of the coagulation floc could not be conducted with respect to Comparative Examples 3 and 12. In addition, with respect to Comparative Examples 11, 14, 18, 19, 21, and 22, the compression of the coagulation floc could not be conducted.

Table 3

| | | Sludge | Sludge dehydrating agent sample | | | | | Floc diameter | Filtration volume for 20 seconds | Amount of SS leak | Water content in cake |
|---|---|---|---|---|---|---|---|---|---|---|---|
| | | | Polymer | | Mass ratio | Concentration of polymer added | | | | | |
| | | | | | | (mg/L) | (%/SS) | (mm) | (mL) | (mL) | (% by mass) |
| Example | 1 | 1 | A1 | Z4 | 50:50 | 120 | 0.9 | 5.0-5.5 | 150 | 2 | 84.8 |
| | 2 | | A2 | | | 100 | 0.8 | 4.5-5.0 | 146 | 2 | 84.7 |
| | 3 | | A3 | | | 100 | 0.8 | 5.0-5.5 | 148 | 2 | 84.9 |
| | 4* | | B1 | Z3 | 30:70 | 120 | 0.9 | 2.5-4.5 | 140 | 4 | 84.7 |
| | 5 | | A2 | Z8 | 50:50 | 120 | 0.9 | 5.5-6.0 | 152 | 2 | 84.9 |
| Comparative Example | 1 | | Z2 | Z4 | 30:70 | 120 | 0.9 | 1.5-2.0 | 85 | 12 | 86.1 |
| | 2 | | Z3 | | | 120 | 0.9 | 2.5-4.0 | 92 | 8 | 85.8 |
| | 3 | | Z5 | | | 120 | 0.9 | 0.5-1.0 | - | - | - |
| | 4 | | Z6 | | | 120 | 0.9 | 3.5-5.5 | 96 | 6 | 85.8 |
| | 5 | | Z8 | | | 120 | 0.9 | 2.0-3.0 | 82 | 12 | 86.0 |
| Example | 6 | 2 | A1 | | | 120 | 1.0 | 5.5-6.0 | 142 | 0 | 84.0 |
| | 7 | | A2 | | | 120 | 1.0 | 5.0-5.5 | 148 | 2 | 84.1 |
| | 8 | | A4 | | | 120 | 1.0 | 5.5-6.0 | 150 | 0 | 84.5 |
| | 9 | | A4 | Z8 | 50:50 | 120 | 1.0 | 6.0-6.5 | 146 | 0 | 84.7 |
| | 10 | | A5 | | | 120 | 1.0 | 4.5-5.5 | 134 | 1 | 83.8 |
| Comparative Example | 6 | | Z1 | Z3 | 60:40 | 120 | 1.0 | 3.5-4.0 | 102 | 2 | 86.1 |
| | 7 | | Z4 | Z5 | 40:60 | 120 | 1.0 | 4.5-5.5 | 98 | 4 | 86.3 |
| | 8 | | Z6 | | | 120 | 1.0 | 3.0-4.0 | 106 | 6 | 86.5 |
| | 9 | | Z8 | | | 120 | 1.0 | 3.5-4.0 | 108 | 4 | 86.2 |
| | 10 | | Z2 | | | 120 | 1.0 | 2.5-3.5 | 72 | 10 | 86.7 |
| Example | 11 | 3 | A1 | | | 450 | 1.6 | 3.0-4.5 | 150 | 0 | 81.2 |
| | 12 | | A2 | | | 450 | 1.6 | 2.5-4.5 | 148 | 0 | 81.0 |
| | 13 | | A3 | Z3 | 70:30 | 400 | 1.4 | 3.0-5.0 | 152 | 0 | 80.8 |
| | 14* | | B1 | Z1 | 40:60 | 400 | 1.4 | 4.0-5.0 | 154 | 0 | 80.9 |
| | 15 | | A5 | | | 400 | 1.4 | 2.5-3.5 | 136 | 2 | 80.2 |
| Comparative Example | 11 | | Z2 | | | 450 | 1.6 | 1.0-1.5 | 48 | 25 | - |
| | 12 | | Z3 | Z7 | 70:30 | 400 | 1.4 | 0.5-1.0 | - | - | - |
| | 13 | | Z4 | | | 450 | 1.6 | 2.0-3.0 | 50 | 0 | 83.3 |
| | 14 | | Z6 | | | 450 | 1.6 | 0.5-1.0 | 40 | 0 | - |
| | 15 | | Z8 | | | 450 | 1.6 | 1.5-3.0 | 60 | 6 | 82.9 |

* (Reference Example; useful for understanding the invention)

Table 4

| | | Sludge | Sludge dehydrating agent sample | | | | | Floc diameter | Filtration volume for 20 seconds | Amount of SS leak | Water content in cake |
|---|---|---|---|---|---|---|---|---|---|---|---|
| | | | Polymer | | Mass ratio | Concentration of polymer added | | | | | |
| | | | | | | (mg/L) | (%/SS) | (mm) | (mL) | (mL) | (% by mass) |
| Example | 16 | 4 | A1 | | | 300 | 1.0 | 3.0-5.0 | 118 | 0 | 80.9 |
| | 17 | | A2 | Z6 | 30:70 | 300 | 1.0 | 2.2-3.0 | 104 | 0 | 81.1 |
| | 18 | | A3 | | | 300 | 1.0 | 2.5-4.5 | 100 | 0 | 81.0 |
| | 19* | | C1 | | | 300 | 1.0 | 3.0-4.5 | 116 | 0 | 80.7 |
| | 20 | | A1 | Z8 | 50:50 | 300 | 1.0 | 4.0-6.0 | 120 | 0 | 81.3 |
| Comparative Example | 16 | | Z3 | Z6 | 30:70 | 300 | 1.0 | 2.0-2.5 | 80 | 15 | 83.0 |
| | 17 | | Z4 | | | 300 | 1.0 | 1.0-2.0 | 78 | 10 | 82.9 |
| | 18 | | Z6 | | | 300 | 1.0 | 1.0-1.5 | 68 | 15 | - |
| | 19 | | Z5 | | | 300 | 1.0 | 1.5-2.0 | 66 | 25 | - |
| | 20 | | Z4 | Z8 | 50:50 | 300 | 1.0 | 2.0-3.0 | 80 | 15 | 83.1 |
| Example | 21 | 5 | A1 | | | 90 | 0.4 | 2.5-3.5 | 70 | 0 | 82.4 |
| | 22 | | A2 | | | 90 | 0.4 | 3.0-3.5 | 74 | 0 | 82.1 |
| | 23 | | A3 | Z5 | 60:40 | 70 | 0.3 | 2.5-3.0 | 68 | 0 | 82.2 |
| | 24* | | C1 | | | 90 | 0.4 | 3.5-4.5 | 76 | 0 | 82.1 |
| | 25 | | A1 | Z9 | 72:28 | 90/35 | 0.4/0.15 | 5.0-6.0 | 82 | 0 | 81.5 |
| Comparative Example | 21 | | Z4 | Z7 | 60:40 | 140 | 0.6 | 2.0-3.0 | 50 | 20 | - |
| | 22 | | Z2 | | | 140 | 0.6 | 1.0-2.0 | 44 | 16 | - |
| | 23 | | Z4 | Z5 | 70:30 | 180 | 0.7 | 2.5-3.0 | 52 | 0 | 83.8 |
| | 24 | | Z7 | | | 90 | 0.4 | 2.0-3.0 | 48 | 6 | 83.1 |
| | 25 | | Z3 | Z9 | 72:28 | 90/35 | 0.4/0.15 | 4.0-5.5 | 56 | 0 | 83.7 |

* (Reference Example; useful for understanding the invention)

As is understood from the results shown in Tables 3 and 4, according to the sludge dehydrating agent of the present invention comprising a crosslinked polymer having a predetermined intrinsic viscosity, the floc diameter was increased, the filtration volume for 20 seconds was increased, the amount of an SS leak was decreased, and the water content in cake could be lowered. That is, it was verified that the sludge dehydrating agent according to the present invention has excellent dehydrating effects. In addition, when the sludge dehydrating agent according to the method of the present invention and an additional polymer other than the sludge dehydrating agent were used in combination, there was a tendency for the floc diameter to be increased and for a good coagulation property to be exhibited.

## Claims

1. A sludge dehydrating method singly using a polymer A described below as a sludge dehydrating agent, wherein the polymer A has an intrinsic viscosity of 0.5 to 5.0 dL/g at 30°C in a 1.0 N aqueous solution of sodium nitrate:

   polymer A: a crosslinked polymer wherein a monomer composition of polymer constitutional units comprises 30 to 95 mol% of a cationic monomer represented by the following general formula (1) and further comprising a nonionic monomer:

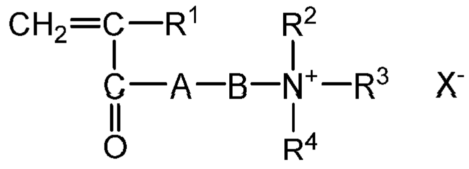 (1)

wherein $R^1$ represents a hydrogen atom or a methyl group; $R^2$ and $R^3$ each independently represent an alkyl group or an alkoxy group having 1 to 3 carbon atoms, or a benzyl group; $R^4$ represents a hydrogen atom, an alkyl group or an alkoxy group having 1 to 3 carbon atoms, or a benzyl group; A represents an oxygen atom or a NH group; B represents an alkylene group or an alkoxylene group having 2 to 4 carbon atoms; and $X^-$ represents an anion,
wherein the sludge dehydrating agent is added to sludge thereby dehydrating the sludge.

2. The sludge dehydrating method according to claim 1, wherein the sludge dehydrating agent is a liquid in the form of an emulsion, or a dried, granulated body or a powder thereof.

## Patentansprüche

1. Verfahren zur Schlammentwässerung unter alleiniger Verwendung eines unten beschriebenen Polymers A als ein Schlammentwässerungsmittel, wobei
das Polymer A eine intrinsische Viskosität von 0,5 bis 5,0 dL/g bei 30°C in einer 1,0 N wässrigen Lösung von Natriumnitrat aufweist:

Polymer A: ein vernetztes Polymer, wobei eine Monomerzusammensetzung von Polymerkonstitutionseinheiten 30 bis 95 Mol-% eines kationischen Monomers umfasst, das durch die folgende allgemeine Formel (1) dargestellt wird, und ferner ein nicht-ionisches Monomer umfasst:

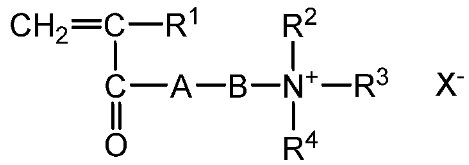 (1)

wobei $R^1$ ein Wasserstoffatom oder eine Methylgruppe darstellt; $R^2$ und $R^3$ jeweils unabhängig voneinander eine Alkylgruppe oder eine Alkoxygruppe mit 1 bis 3 Kohlenstoffatomen oder eine Benzylgruppe darstellen; $R^4$ ein Wasserstoffatom, eine Alkylgruppe oder eine Alkoxygruppe mit 1 bis 3 Kohlenstoffatomen oder eine Benzylgruppe darstellt; A ein Sauerstoffatom oder eine NH-Gruppe darstellt; B eine Alkylengruppe oder eine Alkoxylengruppe mit 2 bis 4 Kohlenstoffatomen darstellt; und $X^-$ ein Anion darstellt,
wobei das Schlammentwässerungsmittel dem Schlamm zugesetzt wird, wodurch der Schlamm entwässert wird.

2. Verfahren zur Schlammentwässerung nach Anspruch 1, wobei das Schlammentwässerungsmittel eine Flüssigkeit in Form einer Emulsion oder ein getrockneter, granulierter Körper oder ein Pulver davon ist.

## Revendications

1. Procédé de déshydratation de boue utilisant uniquement un polymère A décrit ci-dessous en tant qu’agent de déshydratation de boue, dans lequel
le polymère A présente une viscosité intrinsèque de 0,5 à 5,0 dL/g à 30 °C dans une solution aqueuse 1,0 N de nitrate de sodium :

polymère A : un polymère réticulé dans lequel une composition de monomères de motifs constitutifs de polymère comprend 30 à 95 % molaires d’un monomère cationique répondant à la formule générale (1) suivante et comprenant en outre un monomère non ionique :

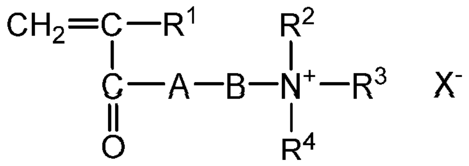

(1)

dans lequel $R^1$ représente un atome d'hydrogène ou un groupement méthyle ; $R^2$ et $R^3$ représentent chacun indépendamment un groupement alkyle ou un groupement alkoxy comportant 1 à 3 atomes de carbone, ou un groupement benzyle ; $R^4$ représente un atome d'hydrogène, un groupement alkyle ou un groupement alkoxy comportant 1 à 3 atomes de carbone, ou un groupement benzyle ; A représente un atome d'oxygène ou un groupement NH ; B représente un groupement alkylène ou un groupement alkoxylène comportant 2 à 4 atomes de carbone ; et X représente un anion,
dans lequel l'agent de déshydratation de boue est ajouté à une boue, déshydratant ainsi la boue.

2. Procédé de déshydratation de boue selon la revendication 1, dans lequel l'agent de déshydratation de boue est un liquide sous la forme d'une émulsion, ou un corps granulé séché ou une poudre de celui-ci.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009280649 A
- JP 2005144346 A
- WO 2008015769 A
- JP 2011224420 A
- JP 63158200 A
- US 2004124154 A1
- JP 2007268414 A
- US 7745529 B2
- EP 1403316 A1